# EUROPÄISCHE PATENTSCHRIFT

(11) **EP 1 073 868 B1**
(45) Veröffentlichungstag und Bekanntmachung des Hinweises auf die Patenterteilung: **25.09.2002**
(21) Anmeldenummer: 99913055.2
(22) Anmeldetag: 20.04.1999
(51) Int. Cl.: F24J 2/04

(54) **SOLARZELLE MIT SONNENKOLLEKTOR UND SPEICHERELEMENTEN**
SOLAR CELL WITH A SOLAR COLLECTOR AND STORAGE ELEMENTS
CELLULE SOLAIRE COMPORTANT UN COLLECTEUR SOLAIRE ET DES ELEMENTS ACCUMULATEURS

(30) Priorität: 20.04.1998 EP 98810343
(43) Veröffentlichungstag der Anmeldung: 07.02.2001
(73) Patentinhaber: Giuseppe Fent Architekturburo, 9500 Wil (CH)
(72) Erfinder: FENT, Giuseppe, CH-9515 Hosenruck (CH); DE FRIES, Jan, Richard, CH-8304 Wallisellen (CH)
(74) Vertreter: Frauenknecht, Alois J.
(86) Internationale Anmeldenummer: CH9900158
(87) Internationale Veröffentlichungsnummer: WO99054669

(56) Entgegenhaltungen:
- EP-B- 0 151 993
- WO-A-87/00607
- AT-B- 375 125
- DE-A- 3 023 714
- FR-A- 2 306 410
- US-A- 4 122 828
- US-A- 4 596 237
- PATENT ABSTRACTS OF JAPAN vol. 008, no. 258 (M-340), 27. November 1984 -& JP 59 129349 A (KOGYO GIJUTSUIN;OTHERS: 0J), 25. Juli 1984
- LEE JONG HO ET AL.: "Theoretical Study of Honeycomb Structure Collector for Space Heating" SOLAR ENERGY, Bd. 32, Nr. 4, 1984, Seiten 349-356, XP002077926

## Beschreibung

Die Erfindung bezieht sich auf eine Solarzelle gemäss dem Oberbegriff des Anspruchs 1.

Aus der US -A- 4,596,237 ist eine Solarzelle zur Gewinnung von transportierbarer thermischer Energie gemäss dem Oberbegriff des Anspruchs 1 bekannt. Dieser weist aussenseitig schwenkbare, jalousieartige Abschattungselemente und/oder eine auf der äusseren transparenten Abdeckung aufgebrachte Beschichtungen auf, welche die maximal einfallende Wärmestrahlung Selektiv begrenzen. Über anschliessende Wabenförmige Absorber-Schichten wird die aufgenommene Energie auf eine Vielzahl von gekapselten Latentwärmespeichern übergeführt, welche die Wärme chemisch speichern und bei ihrer Abkühlung durch resultierende Umkristallisationen zeitverzögert über Wärmedämmungen an die angrenzenden Räume abgeben.

Zwischen den einander gegenüberliegend angeordneten, allseitig dicht verschlossenen Wärmespeichern bildet sich ein Luftpolster; es kann nur ein sehr beschränkter Wärmeübergang erfolgen, so dass die durch Auskühlung erfolgenden Verluste sehr hoch sind, wodurch nur mit relativ kurzer zeitlicher Verzögerung ein geringer Wärmefluss zum Gebäudeinnern erfolgt. Ein fühlbarer Tag-/Nachtausgleich ist daher systembedingt nicht möglich. Der Chemikalien enthaltende Solarkonverter ist zudem in seiner Herstellung sehr aufwendig und je nach verwendetem Speichermedium sogar umweltgefährdend und erfordert bei einem späteren Ersatz oder Abbruch spezielle Entsorgungsmassnahmen.

Ein Niedrigenergiehaus mit einer Strahlungswärme absorbierenden Wabenstruktur ist bekannt (Felix Schmid, Wärmedämmung mit Karton, Schweizer Energie-Fachbuch 1988, Verlag Künzler-Bachmann AG, CH- 9001 St. Gallen, S. 50 - 51). Hierbei handelt es sich um Solarzellen, die mit einer frontseitigen Verglasung in Elementbauweise für einen Wandaufbau von 30 bis 40 cm Dicke eingesetzt sind. In einem Holzrahmen befinden sich eine konventionelle Wärmedämmung und eine vorgelagerte Kartonwabe von 8 cm Dicke, welche über die hinterlüftete, reflexionsarme Verglasung geschützt sind. Die als Sonnenkollektor wirkende Kartonwabe reduziert das Temperaturgefälle in der Aussenhaut des Hauses und minimiert den Wärmefluss von innen nach aussen. Der eigentliche Energiegewinn ist aber auch an sonnigen Tagen relativ klein, da die solare Einstrahlung in die horizontalen, aus Altpapiar gefertigten Waben, nur deren unteren Frontbereich bestraicht und nur durch eine geringe Wärmekonvektion ins Innere gelangt. Die thermische Zeitkonstante des verwendeten Materials ist per se ungenügend und wird in ihrer negativen Wirkung durch die strukturbedingte schlechte Längsleitfähigkeit der Waben verstärkt, welche zudem Kanäle mit annähernd kreisförmigem Querschnitt und gleichbleibender Weite besitzen.

Im praktischen Betrieb hat es sich gezeigt, dass an sonnigen Tagen an der Kartonwabe partiell Temperaturen von bis über 90°C, entstehen, während an sinem trüben Wintertag an der gleichen Stelle -3°C gemessen wurden. Durch diese hohen Temperaturgradienten erfolgt eine beschleunigte Alterung des Wabenmaterials, wobei sich u.a. dessen Quellverhalten irreversibel verschlechtert.

Im weiteren ist aus der AT -B- 375 125 eine isolierende Fassade bekannt, die eine stationäre Struktur zur Abschattung aufweist, deren Einsatz aber auf südseitige Fassaden beschränkt ist. Durch beidseitig verschlossene horizontale Kanäle im Dämmaterial soll in den Wintermonaten eine unmittelbare Einleitung der Wärmestrahlung ins Gebäude erfolgen. Es ist hierdurch aber keine Wärmespeicherung und auch keine zeitverzögerte Wärmeinleitung in das Innere des Gebäudes möglich. Die notwendige hohe Anzahl an Kanälen bedingt hohe Dämmverluste, was sich besonders negativ auswirkt, wenn die Temperaturdifferenz zwischen dem Gebäudeinnern und Aussen gross ist, d.h. bei fehlender Sonnenstrahlung und insbesondere in den späten Nachtstunden.

Es ist daher Aufgabe der vorliegenden Erfindung, eine Solarzelle zu schaffen, welche die vorgenannten Nachteile nicht aufweist und trotzdem ein gutes Sommer/Winterverhalten besitzt. Die Solarzelle soll im Haus einen möglichst ausgeglichenen Temperaturverlauf, unabhängig vom Sonnenstand erzielen; dort ein sogenanntes Komfortklima ermöglichen und im Winter einen spürbaren solaren Warmegewinn bewirken. Die Solarzellen müssen ästhetisch ansprechend sein und sich sowohl in neue Bauten als auch in bestehende Strukturen, zumindest optisch einwandfrei, integrieren lassen. Die Solarzelle muss an die lokalen Verhältnisse der Dampfdiffusion (Tauwasserbildung) anpassbar sein. Auch soll deren Aufbau die Integration und/oder eine Kombination mit an sich bekannten selbsttragenden Bauelementen erlauben.

Ausserdem müssen die zum Bau verwendeten Materialien baubiologisch unbedenklich und möglichst naturnah sein; sie sollen weitgehend den Bedingungen des nachbaltigen Bauens (gemäss Brundtland-Kommission) entsprechen und trotzdem wirtschaftlich, und wartungsfrei sein. Insbesondere sollen keine kostspieligen, auf Umkristallisationen beruhende Latentwärmespeicher Verwendung finden, um die gewünschte thermische Zeitkonstante zu erreichen.

Diese Aufgabe wird durch die Merkmale des Anspruchs 1 gelöst.

Der im Patentanspruch verwendete Begriff einfallswinkelselektiv bezieht sich dabei auf Geometrien und Strukturen in und an Waben, die, gegenüber solchen mit nur gleichförmigen oder leicht zur Sonnenseite aufgeweiteten Kanälen eine bessere Begrenzung der sommerlichen Aufheiztemperaturen ergeben und den Heizbedarf im Winter beträchtlich reduzieren.

In praxi bedeutet dies, dass nur direkte Wärmestrahlung unter einem Winkel von > 60° zum Lot in den Kollektor gelangt.

Wichtig ist eine dampfdiffusionsoffene Ausgestaltung der Solarzelle, was einerseits dem guten Wärmetransport in den Tag- und Nachtphasen dient und anderseits eine Tauwasserbildung an Trennlagen verhindert. Diese Ausgestaltung kann am Bauobjekt von der Himmelsrichtung und von geographischen und lokalen Einstrahlungverhältnissen abhängig, ausgeführt sein.

Die thermische Zeiticonatante, mit konvantionallen Methoden berechnet oder durch Experimente ermittelt und/oder verifiziert, wird dabei ebenfalls den lokalen Verhältnissen angepasst und muss einen Wärmegewinn an den dahinter liegenden Räumen, in den Nachtstunden und deren verzögertes Erwärmen am Tage, garantieren. - In praxi führt dies zu einer Verringerung des Temperaturgefälles zwischen innen und aussen am Gebäudemantel.

Selbstverständlich müssen bei der Auslegung der Isolationen, aufgrund von verbindlichen Bau- und Energievorschriften, auch Kompromisse eingegangen werden, welche physikalisch an sich oft nicht erforderlich wären, da sich der Erfindungsgegenstand auf ein aktives, selbstregulierendes thermisches System bezieht.

In nachfolgenden abhängigen Ansprüchen werden vorteilhafte Weiterbildungen des Erfindungsgegenstandes charakterisiert.

Das in Anspruch 2 angegebene Volumenverhältnis ergibt in jedem Fall, unabhängig von der Dichte des Materials, eine gegenüber den bekannten Kartonwaben höhere Wärmekapazität und damit bessere Speichereigenschaften.

Die Zuschaltung, aber auch die Integration von Spiegeln nach Anspruch 3, erlaubt eine verbesserte Lenkung der Sonneneinstrahlung.

Im einfachsten Fall werden gemäss Anspruch 4 Flachspiegel verwendet, die beispielsweise als Metallstreifen den Wabenöffnungen zugeordnet sind.

Eine spezifische den Bedürfnissen in Bezug auf die Ausrichtung der Wandfläche oder des Dachs und der geographischen Lage eingestellte Orientierung der Spiegel nach den Ansprüchen 5 und 6 ist besonders vorteilhaft.

Eine nochmalige Optimierung, durch einen etwas grösseren technischen Aufwand, lässt sich gemäss Anspruch 7 erzielen.

Ein grosser Energieeintrag kann mit einer Anordnung nach Anspruch 8 erzielt werden, so dass dahinter liegende Räume zur Trocknung von zahlreichen Materialien einsetzbar sind, oder dieser Typ Solarzellen, in Verbindung mit Wärmetauschern auch zur Wassererwärmung oder Heizungsunterstützung nutzbar ist. - Günstig erscheint eine solche Anordnung im Dachbereich, wo entsprechend der in weiten Grenzen frei wählbaren Neigung der höchste Energieertrag zu erwarten ist. Ebenfalls lässt sich eine Luftvorwärmung in mechanischen Hausbelüftungen und Klimaanlagen, mittels einfacher Kreuzstrom-Wärmetauscher, realisieren.

Beschattungselemente sind besonders effizient in den Sommermonaten und stören die Einstrahlung bei leicht zu optimierender Grosse nicht oder nur wenig in den Wintermonaten, Anspruch 9.

Durch eine gezielte Strukturierung der Hohlräume in der Wabe kann die Wärmeabsorption verbessert werden, Anspruch 10.

Durch eine Ausgestaltung der Hohlräume nach Anspruch 11 lässt sich der solare Ertrag nochmals steigern bzw. optimieren.

Geneigte Hohlräume gemäss Anspruch 12 ergeben einen verbesserten Wärmeeintrag, insbesondere wenn die Hohlräume auf der Seite der Wärmedämmung nicht völlig luftdicht sind.

Die in Anspruch 13 erwähnte Folie dient der Unterbindung eines durch einen Lufttransport verursachten Wärmerückflusses in den Bereich der Hinterlüftung.

Besonders effizient ist der Strahlungsertrag mit der Ausgestaltung nach Anspruch 14.

Der Einbezug von weiteren Wärmedämmungen auch in den Wabenöffnungen, gemäss Anspruch 15, stellt eine zweckmässige Alternative zu den vorerwähnten Folien dar.

Durch den ergänzenden Einbezug von bekannten Latentwärmespeichern, die den tagsüber vorhandenen Wärmeüberschuss nachts wieder abgeben und anderseits durch sogenannte "Heat Tubes", welche die Verdunstungswärme von einer ersten zu einer zweiten Zone transportieren und von der zweiten zur ersten Zone eine hohe Wärmedämmung bewirken liesse sich die erfindungsgemässe Solarzelle nochmals optimieren.

Beide Ausführungsformen lassen sich mit allen Varianten von Solarzellen kombinieren.

Durch die hohe Masse und dadurch wählbare Speicherkapazität ist eine Feinkeramik nach Anspruch 16 besonders vorteilhaft, zudem lässt sich diese durch Glasuren wirtschaftlich günstig partiell verspiegeln.

Holz mit einer hohen Hygroskopizität, Anspruch 17, ergibt eine besonders naturnahe Konstruktion und benötigt nur wenig sogenannte "graue" Energie.

Die zu Anspruch 17 getroffene Feststellung lässt sich in Bezug auf das in Anspruch 18 genannte Material nochmals steigern, wobei der hohe Wassergehalt in sich bereits ein ausgleichendes Mikroklima erzeugt und damit aus dieser Sicht als idealer Werkstoff bzw. als Werkstoffkombination erscheint.

Eine strahlungsdurchlässige Wärmedämmung nach Anspruch 19 verbessert die Einleitung von eingestrahlter Energie, vor allem bei einem tiefen Sonnenstand.

Im Gegensatz zu konventionellen Solarzelle ist die Oberflächenstruktur der an sich bekannten transparenten Abdeckung vorzugsweise aussen, was - ohne merkliche Einbusse auf den Energietransport - vom Sonnenstand abhängige schillernde Lichtreflexe erzeugt, welche sich optisch der Umgebung anpassen, bzw. von dieser beeinflusst sind. Vgl. Anspruch 20.

Nachfolgend werden anhand von Zeichnungen beispielhaft Ausführungsbeispiele des Erfindungsgegenstands beschrieben. Dabei sind in allen Figuren gleiche Funktionsteile mit gleichen Bezugsziffern versehen.

Es zeigen:
- Fig. 1: eine vereinfacht dargestellte Gebäudehülle mit Solarzellen im Wand- und Dachbereich, sichtbar sind deren Glasplatten,
- Fig. 2a: eine Schnittdarstellung durch eine Solarzelle aus Fig. 1,
- Fig. 2b: eine Teilansicht auf die Waben in der Solarzelle Fig. 2a,
- Fig. 3: eine Variante einer Solarzelle mit schräg gestellten Hohlräumen, vereinfacht dargestellt,
- Fig. 4: eine zweite Variante einer Ausführung einer Wabe mit Flachspiegeln und Parabolspiegeln,
- Fig. 5: eine dritte Variante mit Flachspiegeln und Wärme absorbierender Folie,
- Fig. 6: eine schlitzförmige Wabe,
- Fig. 7: eine schlitzförmige Wabe mit eingelegtem Wärmedämmmaterial,
- Fig. 8: eine Schnittdarstellung einer Solarzelle mit verbesserter Dampfdiffusion, und einem besonders effizienten zweiten Speicher,
- Fig. 9: eine Variante einer Solarzelle nach Fig. 8 mit einer unterteilten Struktur,
- Fig. 10: sowie Fig. 11 weitere Varianten, zusätzlich mit horizontalen Nuten zur Dampfaufnahme und -abgabe,
- Fig. 12: eine Schnittdarstellung einer Solarzelle im Massstab 1 : 1, besonders geeignet für extreme klimatische Verhältnisse an Nord-Fassaden, mit einer dem Temperaturausgleich dienenden, ersten Wärmedämmung und
- Fig. 13: eine weitere Wabe mit einem umweltfreundlichen Latentwärmespeicher.

In sämtlichen Figuren sind gleiche Funktionsteile mit gleichen Bezugsziffern versehen.

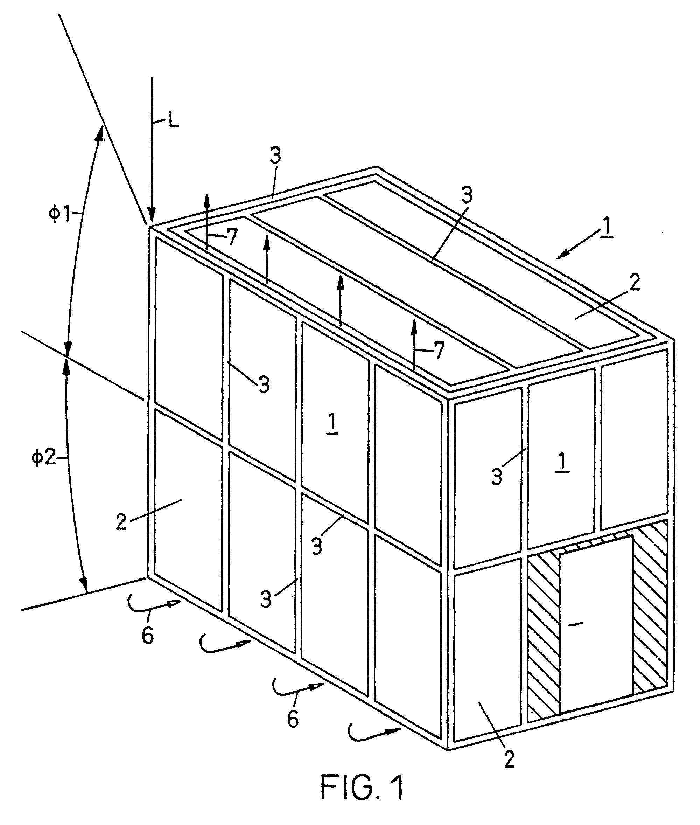

An einer Gebäudehülle Fig. 1 sind mit 1 Solarzellen bezeichnet, von denen lediglich deren an sich bekannte, strukturierte Glasplatten 2 und Rahmen 3 sichtbar sind. Eingezeichnet sind ferner ein Winkelbereich φ1 der die elektromagnetische Sommerstrahlung und ein Winkelbereich φ2 der die diffuse Strahlung und die im Winter, bei niedrigem Sonnenstand, herrschende Strahlung, aufzeigt sowie das Lot L. - Nicht näher bezeichnet sind die konventionellen Bauteile, die schraffiert dargestellt sind.

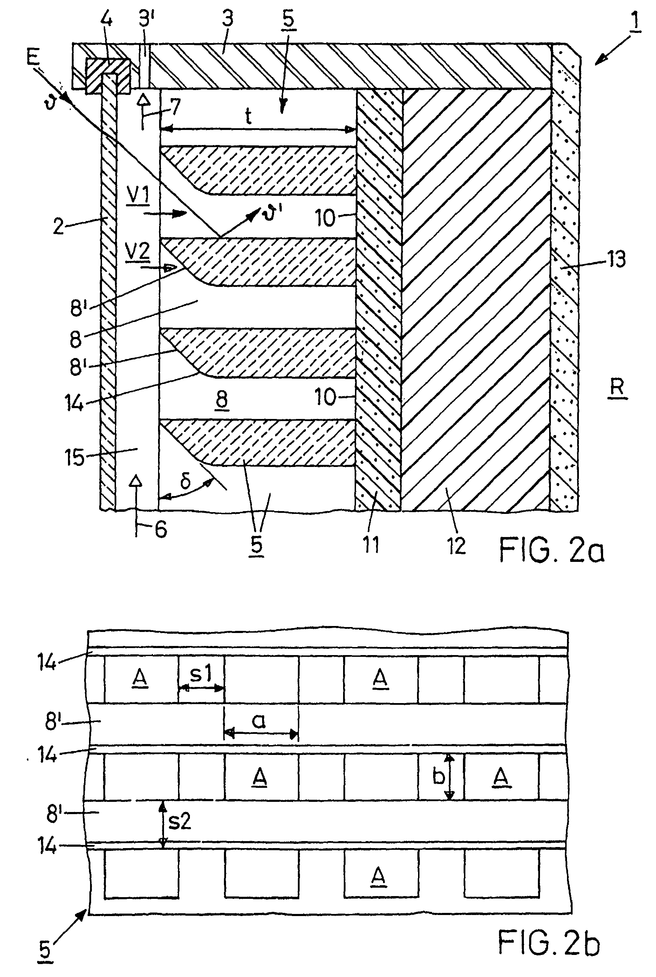

Die Schnittdarstellung der Solarzelle 1, Fig. 2a, zeigt deren typischen Aufbau, mit der frontseitigen Glasplatte 2, (Abmessungen: 0.9 m X 1.8 m). Ein umlaufender Rahmen 3 aus imprägniertem Holz, mit vertikalen Bohrungen 3', nimmt eine handelsübliche Dichtung 4 auf und hält die Glasplatte 2 spannungsfrei. Um einen der Hinterlüftung dienenden Luftspalt 15 zurückversetzt befindet sich eine Wabe 5, der eigentliche Solarkollektor. Die sich einstellende Zuluftströmung ist mit 6 und die Abluftströmung mit 7 bezeichnet. Die Wabe 5 ist aus Feinkeramik gefertigt und besitzt rechteckförmige Öffnungen 8 mit diese aufweitenden Schrägflächen 8'. Diese Wabenstruktur 8 weist ein Volumenverhältnis V von V1 = Öffnungen zu V2 = geschlossenes Volumen von 0.8 zu 1.0 auf und besitzt damit eine bereits beträchtliche inhärente Speichermasse.

Die Strahlung ν der solaren Energie E wird in der Glasplatte 2, in bekannter Weise nach innen umgelenkt, entsprechend der Dichte des Glases und trifft, parallel zur Anschrägung 8', im Hohlraum 8 auf und wird als teilweise reflektierte Strahlung ν' ins Innere gelenkt und weitgehend von der Masse der Wabe 5 absorbiert, d.h. diese lädt sich thermisch auf. Eine nachgeschaltete erste Wärmedämmung 11 wird zusätzlich über Durchlässe 10, in der Wabe 5, durch eine schwache, warme Luftströmung beaufschlagt und führt sie über ihre poröse Struktur ab und nimmt dabei deren Wärme auf. Die anliegende zweite Wärmedämmung 12 dient hauptsächlich der Unterbindung eines Wärmeabflusses vom Rauminneren R nach aussen und weist einen entsprechenden k-Wert auf. Eine weitere Schicht besteht aus einer Gipsplatte 13, welche dem Raum R in gewohnter Weise als Feuchtespeicher und Feuchteausgleich bei Temperaturschwankungen dient.

Die Wirkungsweise der Solarzelle 1 beruht dementsprechend weitgehend auf einer Reduktion des Temperaturgefälles von aussen nach dem Rauminnern R. Die zeitverzögerte Wirkung der Zelle 1 entsteht durch das langsame thermische Aufladen der Masse der Wabenstruktur 5 und dem verzögerten Wärmeabfluss durch die Schichten der Wärmedämmungen 11 bis 13, so dass de facto die Zelle 1 in den Nachtstunden kaum auskühlt und die Temperaturen im Rauminneren R somit auch ohne zusätzliche Heizung, nur wenige Grad Celsius absinken. Physiologisch besonders wichtig ist dabei die resultierende Aufrechterhaltung einer durch Strahlungswärme wirksamen hohen Oberflächentemperatur an den Innenwänden, was bekanntlich Voraussetzung für das angestrebte Komfortklima ist.

Die Wabenstruktur 5, in ihrem aktiven Teil ist der Frontalansicht Fig. 2b zu entnehmen. Hier erkennt man deren rechteckige Apertur A mit der horizontalen Weite a und der vertikalen Weite b sowie die durchgehenden Anschrägungen 8' und die ebenfalls durchgehenden Rundungen 14, welche zusammen die einfallswinkelselektive Struktur für die Strahlung ν bilden. Die Weite a der Wabenöffnung 8 beträgt hier 14 mm, die vertikale Weite 10 mm; die horizontale Wandung sl zwischen den Hohlräumen ist 8 mm dick, die vertikale Wandung s2 beträgt 10 mm, wobei die Wände leicht angefast sind. Die Tiefe t, Fig. 2a, der Wabe 5 misst 50 mm, während die Neigungswinkel δ der grossen Anschrägungen 8' einen Winkel von 45° mit dem Lot bilden.

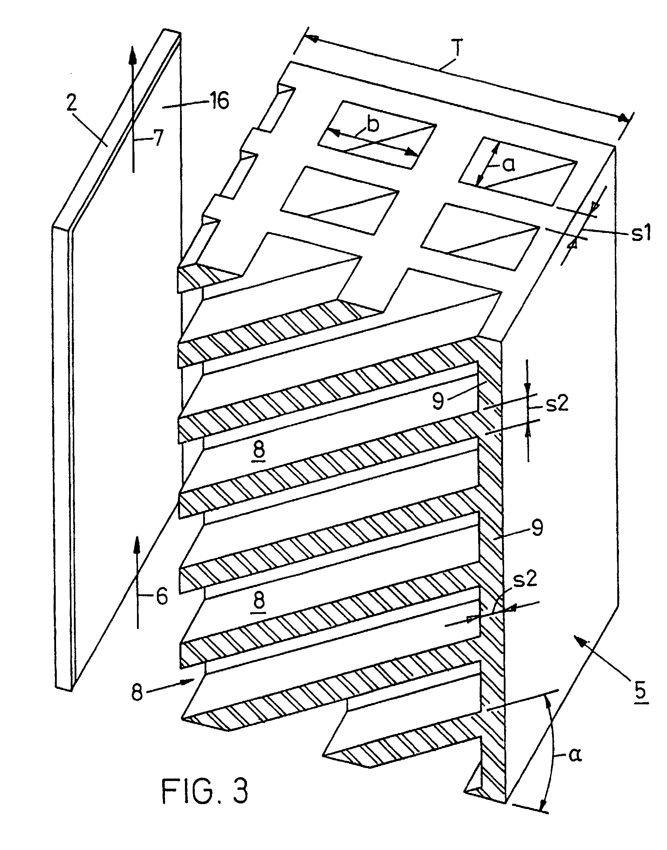

In der Teilschnittdarstellung Fig. 3 ist wiederum eine Glasplatte 2 zu sehen, diesmal mit einer auf ihr aufgeklebten Folie 16, die als Frequenzfilter wirkt, die kurzwellige Solarstrahlung durchlässt und die längerwellige, auf einem tieferen Niveau befindliche innere Wärmestrahlung reflektiert.

Wiederum bilden sich hinter der Glasplatte 2 Strömungen 6 und 7 welche für die Hinterlüftung nötig sind, dahinter ist eine Wabenstruktur 5 angeordnet, welche unter einem Winkel α schräggestellt sacklochartige Hohlräume 8 mit entsprechenden Rückwänden 9 aufweist.

Die Wabe 5 ist aus grobfaserigem, diffusionsfähigem Schichtholz gefertigt und weist nur dünne Wände auf. Die Weiten a = b betragen 8 mm; die Wandungen s1 und s2 sind 10 mm dick. Die Tiefe T der Wabe 5 beträgt 80 mm. Der Winkel α ist 30°; der Abstand zwischen der Glasplatte 2 und der Wabe 5 beträgt 25 mm. Die Folie 16 ist aus Polyethylenteraphtalat und im Handel erhältlich.

Auch diese Wabe 5 besitzt ein thermisches Speichervolumen, das im wesentlichen durch den Wassergehalt des Holzes und weniger durch dessen Masse bestimmt ist; bewährt haben sich Volumenverhältnisse V zwischen den Hohlräumen 8 und der geschlossenen Wabenstruktur von kleiner gleich Faktor 4.

Die schräg gestellten Hohlräume 8 ergeben eine sehr erwünschte thermische Schichtung und bei grösseren und glatten Hohlräumen eine Zirkulation der eingeschlossenen Luft und unterstützen dadurch den Wärmeaustausch.

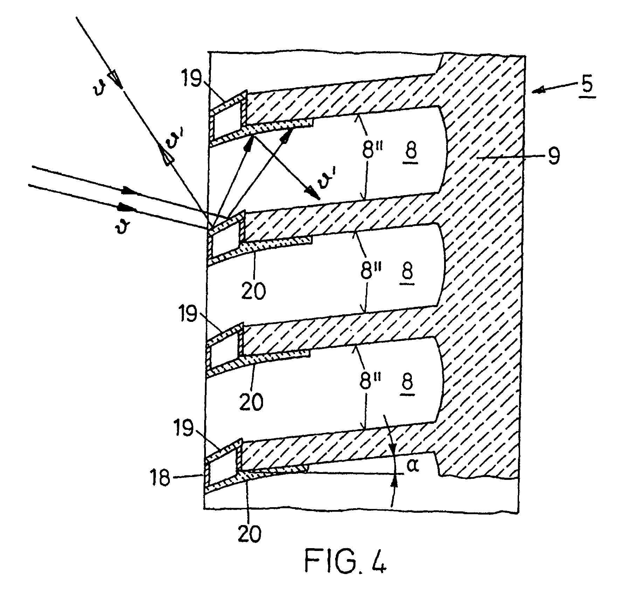

In Fig. 4 ist eine weitere Wabenstruktur 5 aus Feinkeramik dargestellt, welche wiederum unter einem Winkel α von 15° schräggestellte Hohlräume 8 aufweist. Hier sind aber die Frontpartien durch aufgeklebte metallische Reflektoren 18 spiegelnd ausgebildet, wobei auf der Unterseite jeden Hohlraumes 8 ein unter 45° geneigter, polierter Flachspiegel 19 und auf der Oberseite jeweils ein sphärischer Spiegel 20 angebracht sind. Die Hohlräume 8 weisen eine offenporige rauhe Struktur auf.

Die im oberen Teil der in Fig. 4 eingezeichneten Strahlengänge zeigen die Wirkungsweise der Spiegel 19 und 20. Ein bei einem hohen Sommer-Sonnenstand einfallender Strahl ν wird vom Flachspiegel direkt zurückgeworfen, während flacher einfallende Strahlen ν vom oberen sphärischen Spiegel reflektieren, als Strahlen ν' ins Innere des Hohlraums 8 gelenkt und dort von der rauhen Oberfläche 8" absorbiert und in Wärme umgesetzt werden. Die Rückwand 9 besitzt eine relativ grosse Speichermasse, so dass das System nicht nur einen Energiegewinn, sondern auch eine hohe Speicherfähigkeit ausweist.

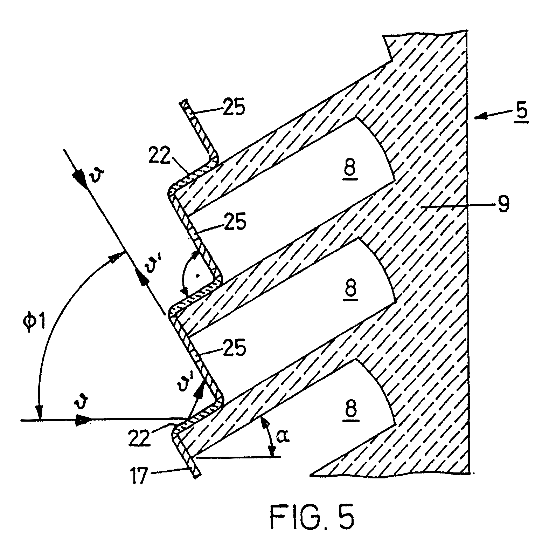

Eine besonders einfach herzustellende Wabenstruktur 5 ist der Fig. 5 zu entnehmen. Die Hohlräume 8 sind wiederum um den Winkel α gegenüber der Horizontalen geneigt und sonnenseitig im Zick-Zack, durch eine schwarze, Metall-Folie 17 mit jeweils unteren Spiegeln 22 verschlossen. Jedem Hohlraum 8 ist mindestens eine Bohrung 25, welche dem Druckausgleich dient, zugeordnet.

Wie Fig. 5 zeigt, werden die bei einem hohen Sonnenstand - in Mitteleuropa - unter einem Winkel φ1 von 45° einfallenden Strahlen an den unteren Spiegeln 22 invertiert, während selbst horizontale Strahlen ν noch als reflektierte Strahlung ν' den Hohlräumen 8 zugeführt wird.

Die letztgenannte Ausführungsform lässt zahlreiche Varianten zu:

Die Folie 17 kann als dünne, schwach metallisierte Folie im Sinne eines Frequenzfilters verwendet und aufgespannt werden; sie kann aber auch als Dünnblech ausgestaltet, eine tragende Funktion ausüben und als passiver Strahler - nach Art einer Relaisstation - eine tiefer frequente Wärmestrahlung in den Hohlraum 8 abgeben.

Diese zweite Ausführungsform erscheint vor allem im Zusammenhang mit der Verwendung von ungebranntem Lehm als Material für die Wabenstruktur 5 als sehr zweckmässig, sie gibt ihr die nötige Festigkeit, auch bei stark wechselnder Luftfeuchte. - Im weiteren lässt sich eine derartige Wabenstrukturen durch Polymere, an sich bekannte Zuschlagstoffe dauerhaft verfestigen und ist sehr wirtschaftlich.

Es hat sich gezeigt, dass ungebrannter Lehm, aufgrund seines hohen Wassergehaltes eine hervorragende Wärmeleitung erbringt und dass damit die gewünschte Dampfdiffusion in den Tag - und Nachtphasen hervorragend funktioniert. Bei der Auslegung des gesamten Aufbaus mit Wabenstruktur, Wärmedämmung und Speicherelementen ist darauf zu achten, dass keine Dampfsperren eingebaut werden und dass die Dampfdiffusion der gesamten Konstruktion, unter Berücksichtigung der extremsten lokalen Wetterbedingungen derart dimensioniert ist, dass sich in ihr kein Tauwasser bildet.- Das hohe Speichervermögen von Lehm dient auch hierbei als eine Art "Buffer".

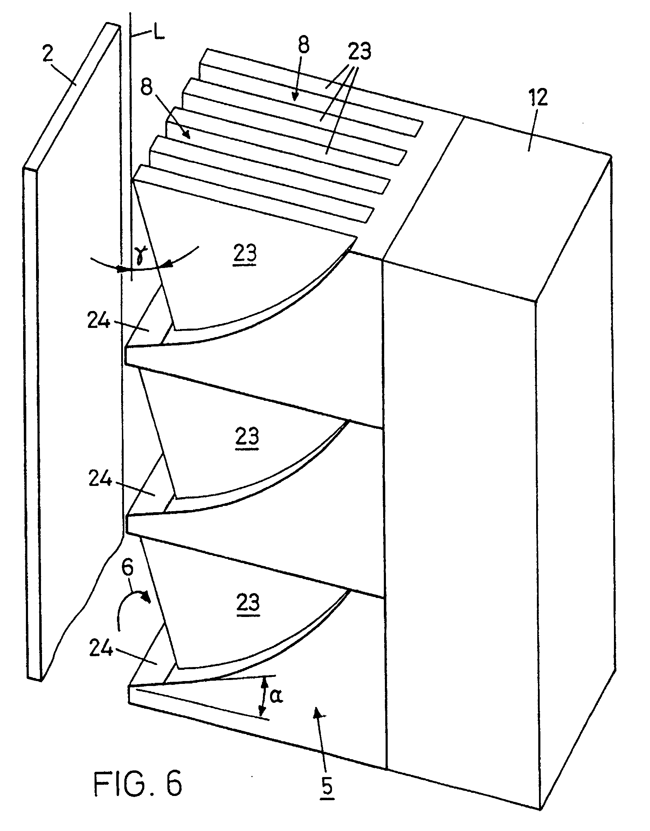

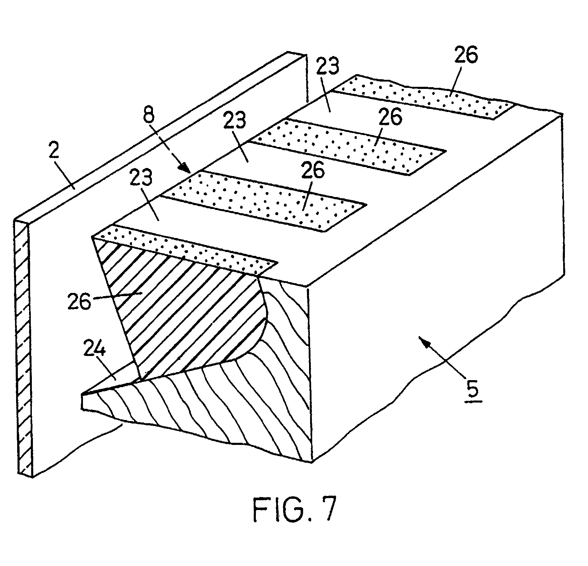

Die Varianten nach Fig. 6 und 7 verwenden demgegenüber Holz für die Wabenstruktur 5 und sind auch aufgrund ihrer einfachen Fertigungstechnik für den rustikalen Bereich besonders geeignet.- Obwohl fertigungstechnisch aufwendiger empfiehlt sich Stirnholz (auch Hirnholz genannt; Schnittfläche senkrecht zur Faser), da dessen wirksame Speicher- und Diffusionsfähigkeit gegenüber längs geschnittenem Holz weit überlegen ist.

Die Hohlräume 8 sind durch einfaches Ausfräsen mit einem Scheibenfräser erstellt worden und sind unten um den Winkel α geneigt, davor befindet sich ein aufgesetzter Reflektor-Streifen 24, während vertikale Wabenwände 23 um den Winkel γ zurückgeschnitten sind. Hinter der Wabenstruktur befinden sich relativ grosse Wärmedämmungen 12 mit entsprechender Speichermasse.

Selbstverständlich wiederholt sich die nur anhand einer einzigen Platte dargestellte Anordnung nach Fig. 6 beliebig oft in einer Solarzelle.

Eine verbesserte Speicherwirkung zeigt Fig. 7 durch das Einlegen einer offenporigen, opaken Wärmedämmung 26 in die Hohlräume 8.

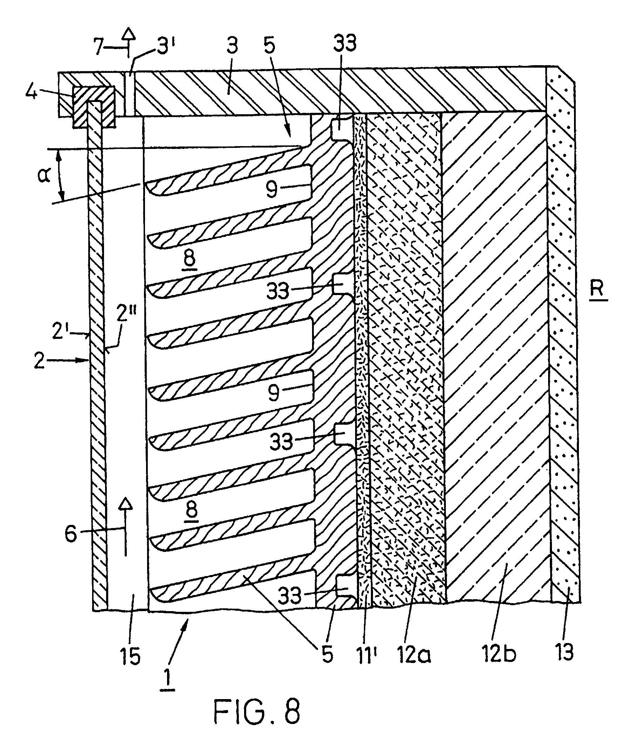

Figur 8 zeigt eine Wabenstruktur 5, mit gegenüber der Horizontalen um den Winkel α = 15° geneigten Hohlräumen 8 aus Fichtenholz, speziell geeignet für einen Einsatz auf der Nordseite von Gebäuden. Zur verbesserten Aufnahme von Wasserdampf befinden sich auf der dem Gebäudeinnern zugewandten Seite der Rückwand 9, durchgehende, horizontal verlaufende Nuten 33, in regelmässigen Abständen angeordnet.

Die erste Wärmedämmung 11' besteht aus einer diffusionsoffenen Trennlage und wirkt als Ausgleichsschicht; die zweite Dämmung 12a besteht aus mit Naturfasern (Sisal, Jute etc.) armiertem Lehm und besitzt ein grosses Speichervermögen sowohl für Wasser als auch in bezug auf die Wärmekapazität und bewirkt die gewünschte grosse thermische Zeitkonstante in Verbindung mit der nachfolgenden Wärmedämmung 12b aus Steinwolle mittlerer Dichte.

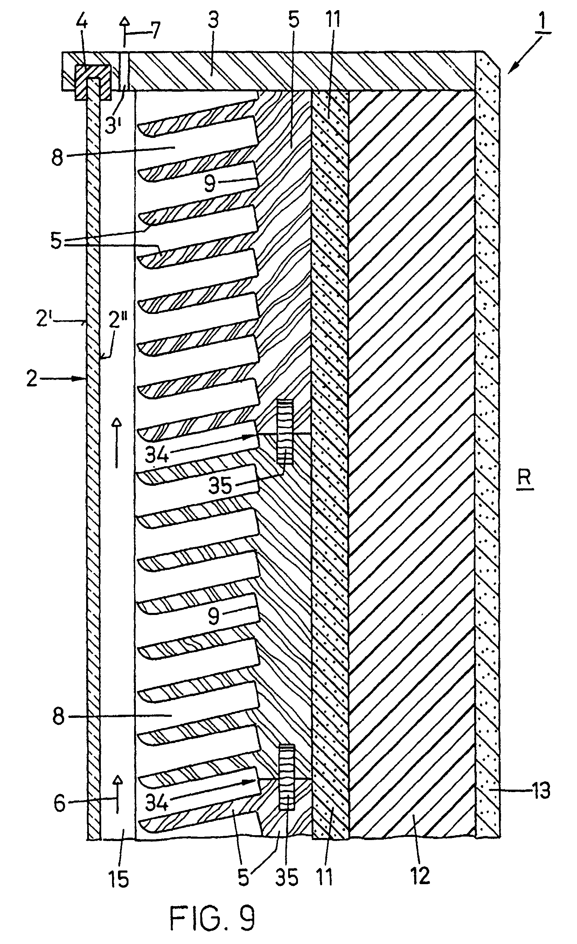

Eine fertigungstechnisch besonders einfach, auf jeder üblichen Holzbearbeitungsmaschine herstellbare Ausführung der Wabenstruktur 5 ist der Fig. 9 zu entnehmen. Diese ist durch einzelne Elemente - im Mass des handelsüblichen Täfers - und mit Federn 35 aus Hartholz zusammengefügt.

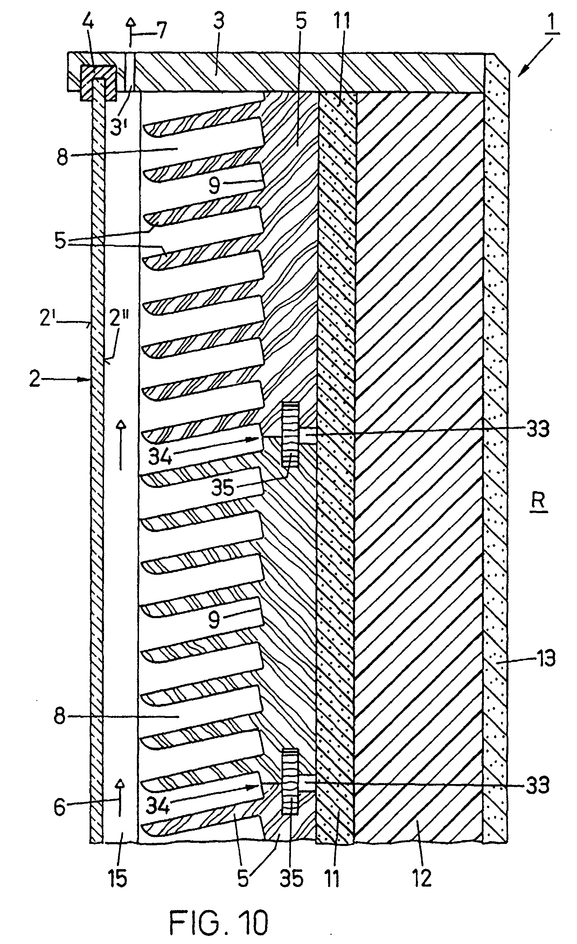

Fig. 10 ist eine Kombination aus einer zusammengefügten Wabenstruktur 5 nach Fig. 8, ausgerüstet mit Nuten 33, analog Fig. 9 und besonders wirtschaftlich in der Herstellung.

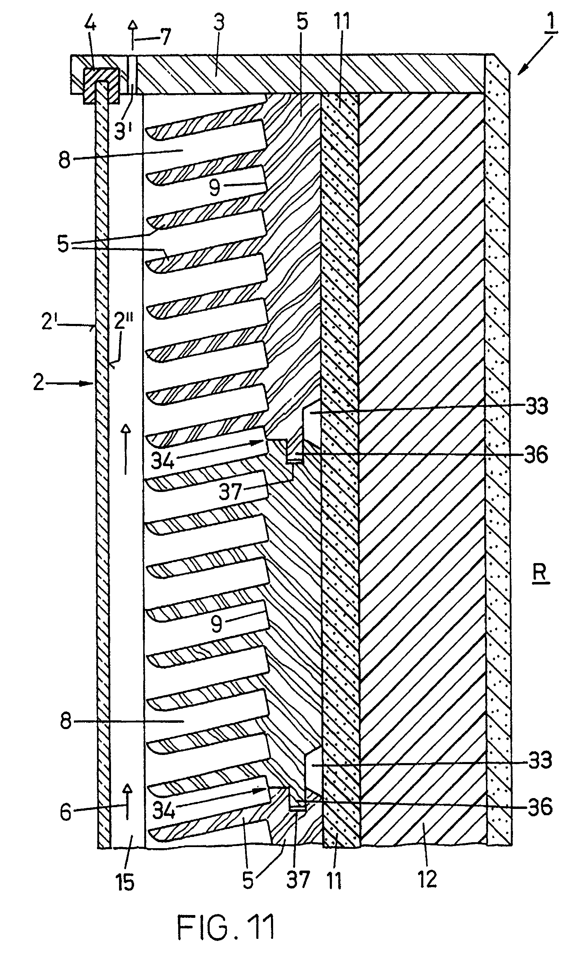

Die Variante nach Fig. 11 zeigt Federn 36, welche in Nuten 37 eingesetzt sind und wobei die einzelnen Elemente wieder Trennfugen 34 bilden, welche einen Dampfaustritt begünstigen. Ebenfalls sind leicht herstellbare Dampfsammelräume in Form von Nuten 33 vorgesehen.

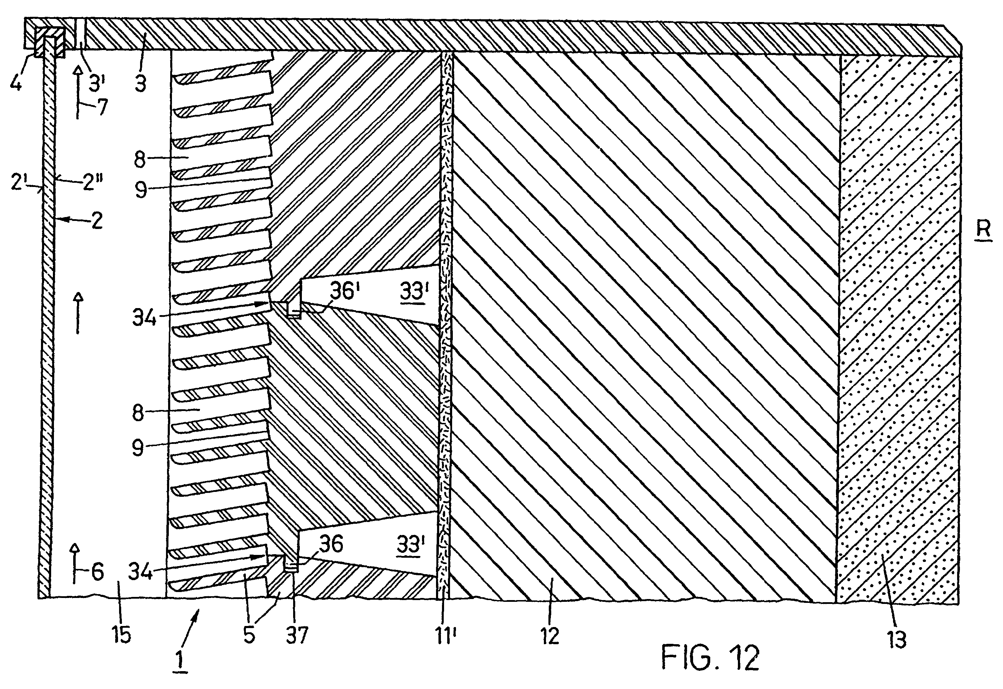

Die Ausführungsform einer Solarzelle 1 nach Fig. 12 zeigt eine besonders ausgeprägte, Hinterlüftung 15 mit einem grossen Luftvolumen und einem ebenfalls grosszügig dimensionierten, düsenartig ausgebildeten Dampfsammelraum 33'. Die erste Wärmedämmung 11' ist hier eine handelsübliche diffusionsoffene Trennlage (Handelsbezeichnung "Permo sec", Klöber GmbH & Co. KG, A-2544 Leobersdorf), die ursprünglich für Stehfalzdächer entwickelt wurde und einen Temperaturund Massausgleich innerhalb der Solarzelle 1 bewirkt.

Die zweite Wärmedämmung 12 besteht aus rezirkulierter Zellulose (Handelsmarke "Fermacell", Fa. Isofloc AG, CH- 9015 St. Gallen). Raumseitig befindet sich wiederum eine Gipsplatte 13, die aufgrund ihrer grossen Masse sehr viel gebundenes Kristallwasser enthält und den Wärme- und Temperaturausgleich des Systems nochmals verbessert. Figur 12 ist im Mass-Stab 1: 1 dargestellt.

Die in den Fig. 8 bis Fig. 12 gezeigten Ausführungsbeispiele weisen Abdeckungen aus sogenannten Solargläsern (Marke OPTISOL-Therm, Pilkington Solar International GmbH, D-50667 Köln) auf; im Gegensatz zum üblichen Einsatz besitzen sie ihre Prismenstruktur 2', Fig. 12, aussen, während sie innen eine glatte Oberfläche 2" aufweisen.

Diese Art des Einbaus der Abdeckung 2 erlaubt die dahinter befindliche Struktur 5 durch ihren Schattenverlauf zu erkennen und passt sich durch Polarisierungseffekte des Lichts in ästhetisch sehr ansprechender Weise der Umgebung an.

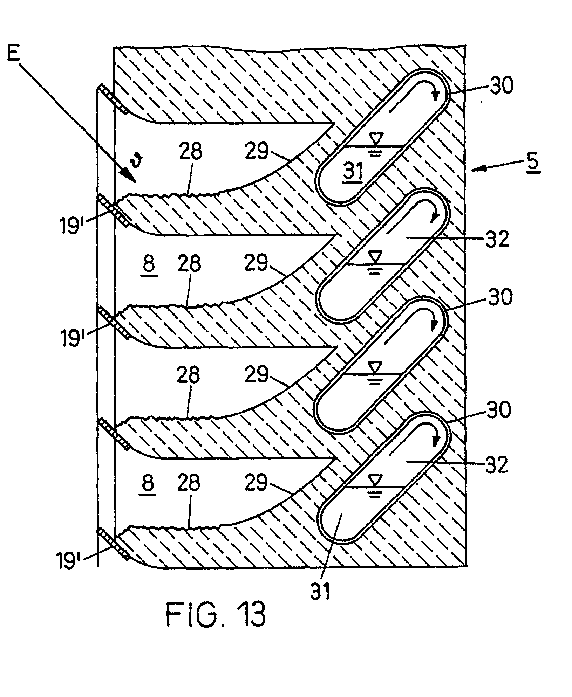

Die in Fig. 13 im Schnitt dargestellte Wabenstruktur 5 enthält einen einfach konzipierten Latentwärmespeicher, der in der Lage ist auch hohe Überschusswärmen zeitverzögert an nicht näher gezeichnete Wärmedämmungen und Speichermassen abzugeben.

Die Wabe 5 mit ihren relativ breiten Hohlräumen 8 weist bogenförmige Oberflächen 28 und 29 auf, wobei eine Rillenstruktur mit 28 und eine glatte Oberfläche mit 29 bezeichnet sind. Im Inneren der keramischen Wabenstruktur 5 sind horizontale, stirnseitig dicht verschlossene Kupferrohre 30 angeordnet, die mit einer bei einem relativ tiefen Siedepunkt verdampfenden Flüssigkeit 31 teilweise gefüllt sind.

Strahlt nun die Energie E in die Hohlräume 8 ein, so wird sie teilweise von den frontseitig angeordneten Spiegeln, den endseitig in der Keramik eingesetzten Metallplatten 19' zurückgeworfen und von der rauhen Rillenstruktur 28 absorbiert. Der Querschnitt der Rohre ist zur Ausnutzung der Wabenstruktur 5 und aus thermodynamischen Gründen elliptisch.

Nach einer gewissen Zeit erwärmt sich das Kupferrohr 30 und sukzessive auch die Flüssigkeit 31, bis deren Energieaufnahme zur Dampfbildung und zur vollständigen Verdunstung führt.

In den Nachtstunden erfolgt nun der umgekehrte Prozess, der Dampf 32 beginnt an den Innenwänden des Kupferrohrs 30 zu kondensieren und gibt seine Verdunstungswärme an diese ab, so dass sich die Abkühlungsphase der Wabe 5, insbesondere in ihrem hinteren Teil bis in den kommenden Morgen erstreckt und sich durch die nachgeschalteten Dämmstoffe im Rauminneren, die Wandtemperatur kaum oder nur um wenige Zehntelgrade reduziert.

Die Flüssigkeit 31 kann in weiten Grenzen frei gewählt werden und ist damit an die Systembedingungen anpassbar. Geeignet erscheinen hierfür niedrig siedende Paraffinöle aber auch andere, ungiftige Erdölderivate.

Anstelle eines Latentwärmespeichers oder auch eventuell mit diesem liessen sich "Heat Tubes" einsetzen, deren thermische Ventilwirkung den nächtlichen Wärmeabfluss beträchtlich mindert.

In allen diskutierten Ausführungsbeispielen ist die Abgabe der von den Speicherelementen aufgenommenen Wärme um wenigstens vier Stunden in den Maxima verzögert. Realisierbar sind Zeitverzögerungen von bis zu zwölf Stunden, so dass die Tag- und Nachtphasen gegeneinader kompensierbar sind.

Selbstverständlich können die vorstehend diskutierten einzelnen Varianten in weiten Grenzen in Teilen oder als Ganzes miteinander kombiniert werden. Allen gemeinsam ist die erzielte Wirkung, nämlich, dass im Inneren eines Hauses die Wand- und/oder Deckentemperatur nachts nur wenig absinkt und tagsüber kein störender, unzeitiger Wärmeeintrag erfolgt. - Somit kann die effektive Raumtemperatur, ohne Komforteinbusse, tief gehalten werden.

Im weiterem sind in Abhängigkeit vom verwendetem Material Brandschutzvorkehrungen zu treffen bzw. die entsprechenden Sicherheitsbestimmungen zu berücksichtigen. Dies geschieht in einfacher Weise durch die Wahl von IR-Reflexionsfolien und/oder -Gläsern, insbesondere vor Wabenstrukturen aus Holz.

Im Siedlungsbau und an grösseren Gebäuden empfiehlt es sich Wabenstrukturen aus nichtbrennbaren Materialien, wie Feinkeramik, Ton und Lehm einzusetzen oder zumindest Kombinationen mit schwerentflammbaren Materialien zu verwenden, um die Brandgefahr zu reduzieren.

## Patentansprüche

1. Solarzelle (1), bestehend aus einem Sonnenkollektor mit einer transparenten, hinterlüfteten Abdeckung (2), mit einer einfallswinkelselektiven Struktur zur Abschattung und zum Ausgleich des vom Sonnenstand jahreszeitlich abhängigen Einfalls der solaren Strahlungswärme, einer diese absorbierenden Wabenstruktur (5), welche hinter der transparenten Abdeckung (2) angeordnet ist, mit zusätzlichen Speicherlementen zur verzögerten Abgabe der Wärme ins Gebäudeinnere und mit einer Wärmedämmung (12), **dadurch gekennzeichnet, dass** die Wabenstruktur (5) selbst auf ihrer der Sonne zugewandten Seite als stationäre, einfallswinkelselektive Geometrie ausgebildet ist und/oder den Wabenöffnungen/Hohlräumen (8) eine stationäre einfallswinkelselektive Struktur direkt vorgelagert ist, dass die Wabenstruktur (5), die Wärmedämmung (11,12) sowie die Speicherelemente (13) dampfdurchlässig und derart dimensioniert sind, dass die Dampfdiffusion in den Tagund Nachtphasen unterhalb der Tauwasserbildung liegt und dass die Abgabe der von den Speicherelementen (13) aufgenommenen Wärme zeitverschoben, in den Maxima um vier bis 12 Stunden verzögert, ins Gebäudeinnere erfolgt.

2. Solarzelle nach Anspruch 1, **dadurch gekennzeichnet, dass** die Wabenstruktur (5) ein Volumenverhältnis (V) von Hohlräumen (8) zu geschlossenem Volumen (V2) von < 4 : 1, vorzugsweise von < 2 : 1 aufweist.

3. Solarzelle nach Anspruch 1 oder 2, **dadurch gekennzeichnet, dass** zumindest partiell und im Bereich der Hohlräume (8) oder der einfallswinkelselektiven Struktur Spiegel (19, 20, 24) vorgesehen sind.

4. Solarzelle nach Anspruch 3, **dadurch gekennzeichnet, dass** die Spiegel Flachspiegel (19) sind.

5. Solarzelle nach Anspruch 3, **dadurch gekennzeichnet, dass** die Spiegel (19, 20, 24) Flachspiegel (19) oder sphärische Spiegel (20) sind und auf einen tiefen Sonnenstand ausgerichtet, Strahlungswärme (E) in die Wabenöffnungen (8) reflektieren.

6. Solarzelle nach Anspruch 3, **dadurch gekennzeichnet, dass** die Spiegel (19, 20, 24) Flachspiegel (19, 24) oder sphärische Spiegel (20) sind und auf einen hohen Sonnenstand ausgerichtet, Strahlungswärme (E) von den Wabenöffnungen (8) nach aussen reflektieren.

7. Solarzelle nach Anspruch 5 oder 6, **dadurch gekennzeichnet, dass** der Spiegel (19) bifocal ausgestaltet ist.

8. Solarzelle nach Anspruch 1, **dadurch gekennzeichnet, dass** die Hohlräume (8) der Wabenstruktur (5) zumindest in ihrer der Sonne zugewandten saite eine in Richtung höheren Sonnenstand grössere Abmessungen aufweisen, als in orthogonaler Richtung.

9. Solarzelle nach Anspruch 1, **dadurch gekennzeichnet, dass** die Hohlräume (6) der Wabenstruktur (5) diese überragende Beschattungsselemente (18, 19) aufweist.

10. Solarzelle nach Ansprach 8, **dadurch gekennzeichnet, dass** die Hohlräume (8) der Wabenstruktur (5) zumindest partiell eine strukturierte Oberfläche (B") aufweisen.

11. Solarzelle nach Anspruch 8, 9 oder 10, **dadurch gekennzeichnet, dass** die Hohlräume (8) eine nach innen sich verjüngende Form aufweisen.

12. Solarzelle nach Anspruch 1, **dadurch gekennzeichnet, dass** die Hohlraume (8) geneigt sind, wobei ihre zur Sonne gerichteten Öffnungen tiefer als der übrige Hohlraum (8) liegen.

13. Solarzelle nach Anspruch 1 oder 12, **dadurch gekennzeichnet, dass** der Wabenstruktur (5) eine den Luftaustausch unterbindende, transparente Folie (16) vorgelagert ist.

14. Solarzelle nach Anspruch 13, **dadurch gekennzeichnet, dass** die Folie ein schwarzer Strahler (17) ist, und dass dieser im Bereich jeder Wabenöffnung (8) zumindest eine Perforierung (25) ausweist.

15. Solarzelle nach Anspruch 1 oder 8, **dadurch gekennzeichnet, dass** die Wabenöffnungen (8) wenigstens teilweise mit einer zusätzlichen Wärmedämmung (26) versehen sind.

16. Solarzelle nach Anspruch 1, **dadurch gekennzeichnet, dass** die Wabenstrnkfar (5) in einer Feinköramik enthalten ist.

17. Solarzelle nach Anspruch 1, **dadurch gekennzeichnet, dass** die Wabenstruktur (5) aus Holz, vorzugsweise Stirnholz besteht.

18. Solarzelle nach Anspruch 1, **dadurch gekennzeichnet, dass** die Wabenstruktur (5) und/oder wenigstens eine Wärmedämmung (11) aus ungebranntem Lehm oder Gips, mit Naturfasern armiert und/oder mit polymeren Zusätzen besteht.

19. Solarzelle nach einem der Ansprüche 1 bis 19, **dadurch gekennzeichnet, dass** die an der Wabenstruktur (5) anliegende Wärmedämmung (11) strahlungsdurchlässig ist.

20. Solarzelle nach einem der vorangehenden Ansprüche, **dadurch gekennzeichnet, dass** die transparente Abdeckung (2) eine strukturierte, der Sonne zugewandte, äussere Oberfläche (2') und eine innere glatte Oberfläche (2") aufweist.

## Claims

1. Solar cell (1), comprising a solar collector with a transparent, rear-ventilated cover (2), with a structure selective for incident angle for shading and adjustment of the seasonal dependent incident of the solar radiant heat, with a radiation absorbing honeycomb structure (5) which is positioned behind the transparent cover (2) with additional storage elements for delayed release of the heat into the inside of the building and with a heat insulation (12) **characterized in that** the honeycomb structure (5) itself is construed on its side facing the sun as stationary geometry selective for the incident angle and/or **in that** a structure selective for the incident angle is positioned in front of the honeycomb openings/hollow spaces (8), **in that** the honeycomb structure (5), the heat insulation (11, 12) and the storage elements (13) are permeable to vapour and are dimensioned such that the vapour diffusion in the day and night phases is below the dew formation, and **in that** the release of the heat taken up by the storage elements (13) takes place into the inside of the building with a time shift, delayed in the maxima by four to twelve hours.

2. Solar cell according to claim 1, **characterized in that** the honeycomb structure (5) has a volume ratio (V) of hollow spaces (8) to closed volume (V2) of < 4 : 1, preferably of<2:1.

3. Solar cell according to claim 1 or 2, **characterized in that** mirrors (19, 20, 24) are provided at least partly and in the region of the hollow spaces (8) or structure selective for the incident angle.

4. Solar cell according to claim 3, **characterized in that** the mirrors are flat mirrors (19).

5. Solar cell according to claim 3, **characterized in that** the mirrors (19, 20, 24) are flat mirrors (19) or spherical mirrors (20) and, aligned at a low height of the sun, reflect radiant heat (E) into the honeycomb openings (8).

6. Solar cell according to claim 3, **characterized in that** the mirrors (19, 20, 24) are flat mirrors (19, 24) or spherical mirrors (20) and, aligned to a high height of the sun, reflect radiant heat (E) outwards from the honeycomb openings (8).

7. Solar cell according to claim 5 or 6, **characterized in that** the mirror (19) is constructed bifocally.

8. Solar cell according to claim 1, **characterized in that** the hollow spaces (8) of the honeycomb structure (5) have larger dimensions in the direction of a higher height of the sun than in the orthogonal direction, at least in their side facing the sun.

9. Solar cell according to claim 1, **characterized in that** the hollow spaces (8) of the honeycomb structure (5) have shading elements (18, 19) which project over these.

10. Solar cell according to claim 8, **characterized in that** the hollow spaces (8) of the honeycomb structure (5) at least partly have a structured surface (8").

11. Solar cell according to claim 8, 9 or 10. **characterized in that** the hollow spaces (8) have a shape which narrows inwards.

12. Solar cell according to claim 1, **characterized in that** the hollow spaces (8) are inclined, their openings directed towards the sun being lower than the remaining hollow space (8).

13. Solar cell according to claim 1 or 12, **characterized in that** a transparent film (16) which suppresses exchange of air is positioned in front of the honeycomb structure (5).

14. Solar cell according to claim 13, **characterized in that** the film is a black radiation emitter (17), and **in that** this has at least one perforation (25) in the region of each honeycomb opening (8).

15. Solar cell according to claim 1 or 8, **characterized in that** the honeycomb openings (8) are at least partly provided with an additional heat insulation (26).

16. Solar cell according to claim 1, **characterized in that** the honeycomb structure (5) is contained in a fine ceramic.

17. Solar cell according to claim 1, **characterized in that** the honeycomb structure (5) is made of wood, preferably grain-cut wood.

18. Solar cell according to claim 1, **characterized in that** the honeycomb structure (5) and/or at least one heat insulation (11) is made of unfired clay or gypsum, armoured with natural fibres, and/or with polymeric additives.

19. Solar cell according to one of claims 1 to 18, **characterized in that** the heat insulation (11) adjacent to the honeycomb structure (5) is permeable to radiation.

20. Solar cell according to one of the preceding claims, **characterized in that** the transparent cover (2) has a structured outer surface (2') facing the sun and an inner smooth surface (2").

## Revendications

1. Cellule solaire (1) composée d'un collecteur solaire avec une couverture transparente (2) ventilée en face arrière, avec une structure sélective de l'angle d'incidence pour l'assombrissement et pour l'équilibrage de l'incidence, dépendante en saison de la hauteur du soleil, de la chaleur de rayonnement solaire, avec une structure en nid d'abeilles (5) absorbant cette dernière et disposée en arrière de la couverture transparente (2), avec des éléments accumulateurs supplémentaires pour la cession temporisée de la chaleur à l'intérieur du bâtiment, et avec un calorifugeage (12), **caractérisée en ce que** la structure en nid d'abeilles (5) elle-même est réalisée sur son côté tourné vers le soleil sous forme de géométrie stationnaire, sélective de l'angle d'incidence et/ou une structure stationnaire sélective de l'angle d'incidence est montée directement en avant des ouvertures du nid d'abeilles/espaces creux (8), **en ce que** la structure en nid d'abeilles (5), le calorifugeage (11, 12), ainsi que les éléments accumulateurs (13) sont perméables à la vapeur et dimensionnés de sorte que la diffusion de vapeur dans les phases de jour et de nuit se situe au-dessous de la formation d'eau de condensation, et **en ce que** la cession de la chaleur, absorbée par les éléments accumulateurs (13), à l'intérieur du bâtiment est décalée dans le temps, retardée de quatre à 12 heures dans les maxima.

2. Cellule solaire suivant la revendication 1, **caractérisée en ce que** la structure en nid d'abeilles (5) présente un rapport volumique (V) d'espaces creux (8) sur le volume fermé (V2) inférieur à 4 : 1, de préférence inférieur à 2 : 1.

3. Cellule solaire suivant l'une des revendications 1 et 2, **caractérisée en ce que** des miroirs (19, 20, 24) sont prévus au moins partiellement et dans la zone des espaces creux (8) ou de la structure sélective de l'angle d'incidence.

4. Cellule solaire suivant la revendication 3, **caractérisée en ce que** les miroirs sont des miroirs plans (19).

5. Cellule solaire suivant la revendication 3, **caractérisée en ce que** les miroirs (19, 20, 24) sont des miroirs plans (19) ou des miroirs sphériques (20) et, orientés sur une faible hauteur du soleil, réfléchissent de la chaleur de rayonnement (E) dans les ouvertures de nid d'abeilles (8).

6. Cellule solaire suivant la revendication 3, **caractérisée en ce que** les miroirs (19, 20, 24) sont des miroirs plans (19, 24) ou des miroirs sphériques (20) et, orientés sur une hauteur de soleil élevée, réfléchissent de la chaleur de rayonnement (E) des ouvertures de nid d'abeilles (8) vers l'extérieur.

7. Cellule solaire suivant l'une des revendications 5 et 6, **caractérisée en ce que** le miroir (19) a une configuration bifocale.

8. Cellule solaire suivant la revendication 1, **caractérisée en ce que** les espaces creux (8) de la structure en nid d'abeilles (5) présentent des dimensions plus élevées dans la direction de la hauteur de soleil plus haute, au moins dans leur côté tourné vers le soleil, que dans la direction orthogonale.

9. Cellule solaire suivant la revendication 1, **caractérisée en ce que** les espaces creux (8) de la structure en nid d'abeilles (5) présentent des éléments d'ombrage (18, 19) dépassant de ces derniers.

10. Cellule solaire suivant la revendication 8, **caractérisée en ce que** les espaces creux (8) de la structure en nid d'abeilles (5) présentent au moins partiellement une surface structurée (8'').

11. Cellule solaire suivant l'une des revendications 8, 9 et 10, **caractérisée en ce que** les espaces creux (8) présentent une forme se rétrécissant vers l'intérieur.

12. Cellule solaire suivant la revendication 1, **caractérisée en ce que** les espaces creux (8) sont inclinés, leurs ouvertures dirigées vers le soleil étant plus basses que le reste de l'espace creux (8).

13. Cellule solaire suivant l'une des revendications 1 et 12, **caractérisée en ce qu'**une feuille (16) transparente, jugulant l'échange d'air, est montée en avant de la structure en nid d'abeilles (5).

14. Cellule solaire suivant la revendication 13, **caractérisée en ce que** la feuille est un émetteur noir (17), et **en ce que** ce dernier présente au moins une perforation (25) dans la zone de chaque ouverture de nid d'abeilles (8).

15. Cellule solaire suivant l'une des revendications 1 et 8, **caractérisée en ce que** les ouvertures de nid d'abeilles (8) sont munies au moins partiellement d'un calorifugeage (26) supplémentaire.

16. Cellule solaire suivant la revendication 1, **caractérisée en ce que** la structure en nid d'abeilles (5) est contenue dans une céramique fine.

17. Cellule solaire suivant la revendication 1, **caractérisée en ce que** la structure en nid d'abeilles (5) se compose de bois, de préférence de bois de bout.

18. Cellule solaire suivant la revendication 1, **caractérisée en ce que** la structure en nid d'abeilles (5) et/ou au moins un calorifugeage (11) se composent d'argile verte ou de plâtre, armés de fibres naturelles et/ou avec des additifs polymères.

19. Cellule solaire suivant l'une des revendications 1 à 19, **caractérisée en ce que** le calorifugeage (11) adjacent à la structure en nid d'abeilles (5) est perméable au rayonnement.

20. Cellule solaire suivant l'une des revendications précédentes, **caractérisée en ce que** la couverture transparente (2) présente une surface extérieure structurée (2'), tournée vers le soleil, et une surface intérieure lisse (2'').
